Europäisches Patentamt

European Patent Office

Office européen des brevets

(19)

(11) Numéro de publication: **0 069 645**
**B1**

(12) # FASCICULE DE BREVET EUROPEEN

(45) Date de publication du fascicule du brevet:
23.01.85

(51) Int. Cl.⁴: **B 60 N 1/10**

(21) Numéro de dépôt: **82401187.8**

(22) Date de dépôt: **28.06.82**

(54) **Siège escamotable pour véhicule automobile.**

(30) Priorité: **07.07.81 FR 8113577**

(43) Date de publication de la demande:
**12.01.83 Bulletin 83/2**

(45) Mention de la délivrance du brevet:
**23.01.85 Bulletin 85/4**

(84) Etats contractants désignés:
**DE GB IT SE**

(56) Documents cités:
**FR - A - 1 217 149**
**FR - A - 2 326 309**
**GB - A - 705 249**
**US - A - 4 191 417**

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **Prion, Christian Joseph, 1, Square Yves du Manoir, F-91300 Massy (FR)**

(74) Mandataire: **Boivin, Claude, 9, rue Edouard-Charton, F-78000 Versailles (FR)**

## Description

La présente invention concerne les sièges escamotables pour véhicules automobiles comprenant une assise qui est fractionnée sur toute sa hauteur en deux blocs adjacents et dont l'extrémité avant est reliée par un axe de pivotement à la caisse du véhicule.

Lorsque l'assise d'un siège usuel de véhicule est rabattue et mise »en chandelle«, elle vient à proximité du dossier du siège situé devant de sorte que, lorsque le dossier est à son tour rabattu, il constitue une surface de chargement sensiblement plane prolongeant la surface de chargement constituée par le plancher arrière du véhicule, ce qui permet la mise en place d'une charge de grande longueur.

Mais, dans les sièges de ce genre actuellement réalisés, l'épaisseur de l'assise mise en chandelle réduit l'espace longitudinal disponible derrière le dossier du siège situé devant.

Le brevet français 2 326 309 décrit un siège arrière dans l'assise duquel est découpé un coussin rabattable vers l'arrière de manière à former une cavité dans l'assise. Lorsque le coussin est rabattu, on peut rabattre le dossier du siège avant dont l'extrémité vient se loger dans la cavité, ce qui forme un lit, le coussin constituant un oreiller. Mais ce siège dont l'assise n'est d'ailleurs pas rabattable, ne permet pas de dégager l'arrière du véhicule pour y loger une charge. De son côté le brevet U. S. 4 191 417 montre un siège de véhicule dont l'assise comprend une partie fixe et un coussin qui est solidaire de bras articulés sur le plancher du véhicule.

La présente invention a pour objet un siège escamotable du type précédemment indiqué, mais avec lequel l'espace disponible est supérieur à celui qu'il est possible d'obtenir avec les sièges connus.

Le siège selon l'invention est caractérisé en ce que les deux blocs de l'assise sont articulés l'un à l'autre autour d'un axe transversal sensiblement médian et prévu dans la zone supérieure de l'assise.

Pour amener le siège en position escamotée, on rabat le bloc arrière de l'assise sur le bloc avant. On rabat ensuite vers l'avant l'ensemble des deux blocs superposés qui vient se loger dans la fosse ménagée entre l'arrière du dossier du siège avant et la pare-close d'assise arrière. Il ne reste plus qu'à basculer vers l'avant le dossier du siège.

Dans un mode de réalisation avantageux de l'invention, l'axe d'articulation avant de l'assise et l'axe d'articulation inférieur du dossier sont situés sensiblement dans un même plan horizontal. Dans ces conditions, quand le siège est en position escamotée, la face inférieure du bloc avant de l'assise se raccorde au dossier et forme avec lui une surface de support continue.

On a décrit ci-après, un mode de réalisation du siège selon l'invention avec référence aux dessins annexés dans lesquels:

La Figure 1 est une vue en élévation du siège en position d'utilisation;

La Figure 2 est une vue semblable à la Figure 1, lors de sa mise en position escamotée;

La Figure 3 est une vue semblable à la Figure 1 et montre le siège en position escamotée;

La Figure 4 montre un détail de réalisation de l'articulation reliant les deux blocs;

Les Figures 5 et 6 montrent respectivement en coupe et en perspective un détail d'une autre articulation pouvant être utilisée pour relier les deux blocs.

Tel qu'il est représenté, le siège selon l'invention comprend un dossier 1 dont la partie inférieure est articulée par rapport à la caisse 2 du véhicule autour d'un axe horizontal 3. L'assise du siège est formée de deux blocs adjacents 4a et 4b qui sont reliés l'un à l'autre par une articulation sensiblement médiane 5 prévue à la partie haute de l'assise. Le bloc avant 4a est articulé par rapport à la caisse du véhicule autour d'un axe horizontal 6 situé sensiblement au même niveau que l'axe 3.

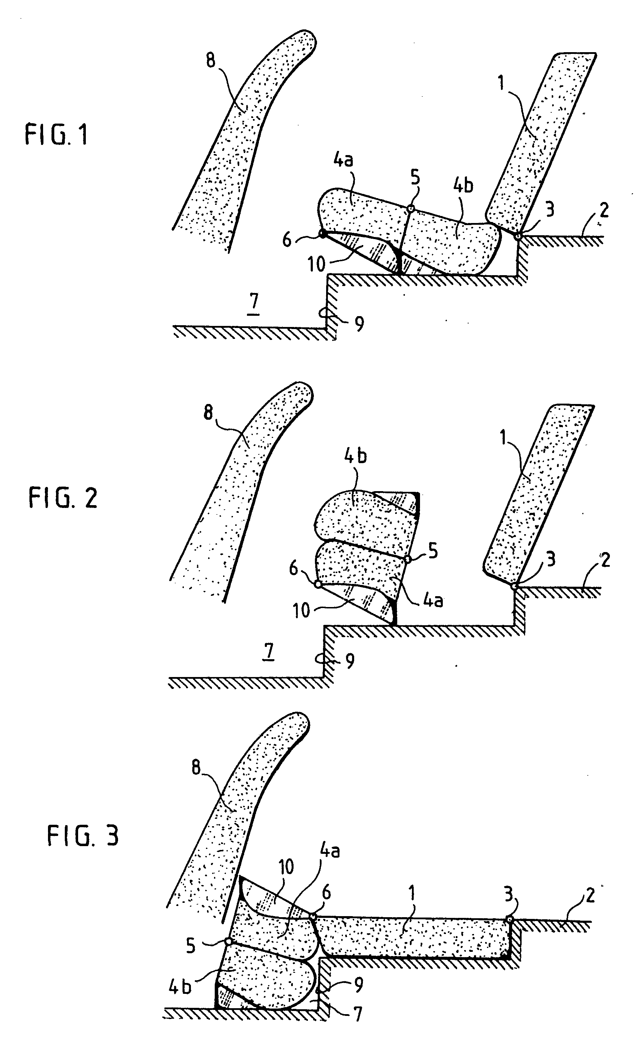

Pour escamoter le siège arrière, on rabat sur le bloc avant 4a le bloc arrière 4b qui vient coiffer le bloc avant (Figure 2). Puis on rabat l'ensemble des deux blocs empilés 4a et 4b vers l'avant, autour de l'axe d'articulation 6. Les deux blocs viennent ainsi se loger à l'intérieur de la fosse 7 ménagée entre l'arrière du dossier 8 du siège avant et la pare-close d'assise arrière 9. Ce logement se fait facilement grâce à la réduction de la hauteur nécessaire, qui est due au repli du bloc 4b sur le bloc 4a.

Il ne reste plus qu'à rabattre le dossier 1 vers l'avant autour de l'axe 3 (Figure 3). La face du bloc 4a qui est sa face inférieure en position d'utilisation normale vient alors se raccorder au dossier rabattu et est sensiblement horizontale. L'espace longitudinal disponible pour la mise en place d'une charges s'étend ainsi jusqu'au dossier 8 du siège avant.

Le bloc avant 4a comporte à sa partie inférieure des jupes ou flasques latéraux 10 qui améliorent le centrage des charges lorsque le siège arrière est en position escamotée.

L'articulation 5 ne doit pas être rigide car, s'il en était ainsi, la souplesse de l'assise ne serait pas conservée et le confort serait notablement diminué.

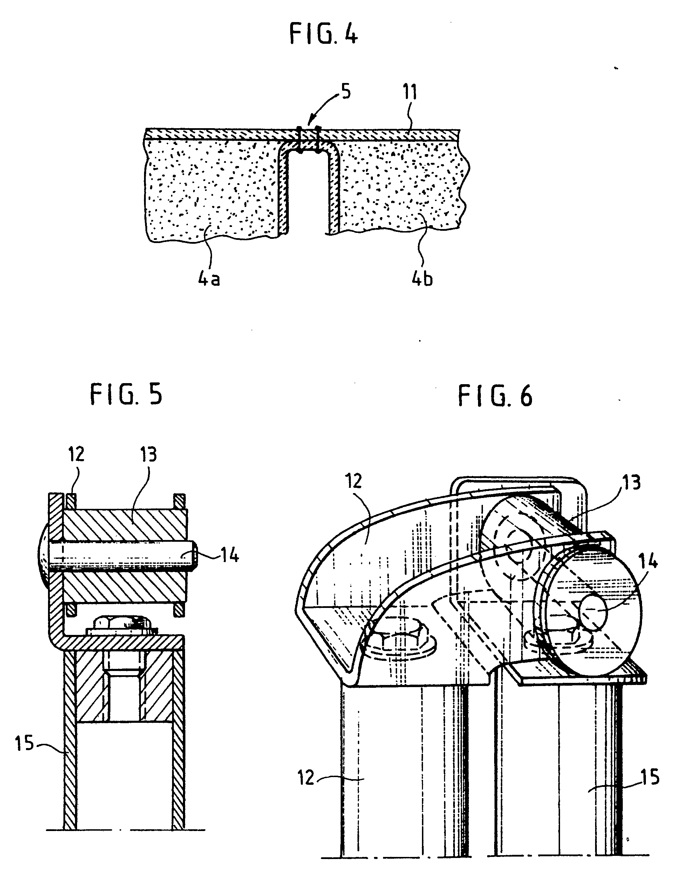

Pour assurer cette souplesse, on peut, comme le montre la Figure 4, constituer l'articulation en reliant entre eux les deux blocs 4a et 4b par leur garnissage extérieur 11.

On peut également fixer latéralement sur l'armature 12 de l'un des blocs deux paliers rigides 13 dont chacun est disposé à l'une des extrémités de l'axe 5 et contient un pivot 14 solidaire de l'armature 15 de l'autre bloc (Figures 5 et 6).

## Revendications

1. Siège escamotable pour degager l'arrière d'un véhicule automobile comprenant une assise qui est fractionnée transversalement sur toute sa hauteur en deux blocs adjacents (4a et 4b) et dont l'extrémité avant est reliée par un axe de pivotement (6) à la caisse du véhicule, caractérisé en ce que les deux blocs (4a et 4b) de l'assise sont articulés l'un à l'autre autour d'un axe transversal (5) sensiblement médian et prévu dans la zone supérieure de l'assise.

2. Siège selon la revendication 1, caractérisé en ce que l'axe d'articulation avant (6) de l'assise et l'axe d'articulation inférieur (3) du dossier sont situés sensiblement dans un même plan horizontal.

3. Siège selon la revendication 2, caractérisé en ce que la face inférieure du bloc avant (4a) est sensiblement plane et en ce que les blocs (4a et 4b) sont conformés de manière que, lorsque le siège est en position escamotée, cette face inférieure se trouve sensiblement dans le prolongement du dossier.

4. Siège selon l'une quelconque des revendications précédentes, caractérisé en ce que les deux blocs (4a et 4b) sont liés l'un à l'autre par leur garnissage extérieur (11).

5. Siège selon l'une quelconque des revendications 1 à 3, caractérisé en ce que, à chaque extrémité de l'axe d'articulation (5) des deux blocs, un palier rigide (13) est fixé sur l'armature (12) de l'un des blocs et contient un pivot (14) solidaire de l'armature (15) de l'autre bloc.

6. Siège selon l'une quelconque des revendications précédentes, caractérisé en ce que le bloc avant (4a) comporte, à sa partie inférieure, des jupes ou flasques latéraux de centrage (10).

## Patentansprüche

1. Versenkbarer Sitz zur Freigabe des hinteren Raumes eines Kraftfahrzeuges mit einem Sitzteil, das in Querrichtung über seine ganze Höhe in zwei aneinanderangrenzende Blöcke (4a, 4b) unterteilt ist und dessen vorderes Ende über eine Drehachse (6) mit dem Chassis des Fahrzeuges verbunden ist, dadurch gekennzeichnet, daß die beiden Blöcke (4a und 4b) des Sitzteiles um eine in Querrichtung verlaufende, im wesentlichen in der Mitte liegende und im oberen Bereich des Sitzteiles vorgesehene Drehachse (5) gegeneinander verschwenkbar sind.

2. Sitz nach Anspruch 1, dadurch gekennzeichnet, daß die vordere Drehachse (6) des Sitzteiles und die untere Drehachse (3) der Rückenlehne im wesentlichen in einer horizontalen Ebene angeordnet sind.

3. Sitz nach Anspruch 2, dadurch gekennzeichnet, daß die untere Fläche des vorderen Blockes (4a) im wesentlichen eben ausgebildet ist und daß die Blöcke (4a und 4b) derart aneinander angepaßt sind, daß, wenn der Sitz sich in der versenkten Stellung befindet, diese untere Fläche im wesentlichen in Verlängerung zur Rükkenlehne angeordnet ist.

4. Sitz nach einem der vorhergehenden Ansprüche, dadurch gekennzeichnet, daß die beiden Blöcke (4a und 4b) über ihre äußeren Bezüge (11) miteinander verbunden sind.

5. Sitz nach einem der Ansprüche 1 bis 3, dadurch gekennzeichnet, daß an jedem Ende der Drehachse (5) der beiden Blöcke ein starres Lager (13) an einem Beschlag (12) des einen Blokkes befestigt ist, das einen Drehzapfen (14) enthält, der kraftschlüssig mit dem Beschlag (15) des anderen Blockes verbunden ist.

6. Sitz nach einem der vorhergehenden Ansprüche, dadurch gekennzeichnet, daß der vordere Block (4a) an seinem Unterteil mit Führungsflächen oder seitlichen Flanschen (10) zur Zentrierung versehen ist.

## Claims

1. A retractable seat for freeing the rear of a motor vehicle comprising a sitting portion which is divided transverselyover the whole of its height into two adjacent blocks (4a and 4b) and whose front end is connected by a pivoting shaft to the body of the vehicle, characterized in that the two blocks (4a and 4b) of the sitting portion are hinged to one another about a transverse substantially median axis (5) provided in the upper zone of the sitting portion.

2. Seat according to claim 1, characterized in that the front hinge shaft (6) of the sitting portion and the lower hinge shaft (3) of the seat-back are situated substantially in the same horizontal plane.

3. Seat according to claim 2, characterized in that the lower face of the front block (4a) is substantially flat and in that the blocks (4a and 4b) are shaped so that, when the seat is in the retracted position, this lower face is substantially in the extension of the seat-back.

4. Seat according to any one of the preceding claims, characterized in that the two blocks (4a and 4b) are connected to one another by their outer covering (11).

5. Seat according to any one of claims 1 to 3, characterized in that, at each end of the hinge axis (5) of the two blocks, a rigid bearing (13) is fixed to the frame (12) of one of the blocks and contains a pivot (14) integral with the frame (15) of the other block.

6. Seat according to any one of the preceding claims, characterized in that the front block (4a) comprises in its lower part lateral centering skirts or flanges (10).

FIG. 1

FIG. 2

FIG. 3

# FIG. 4

# FIG. 5

# FIG. 6